# EUROPÄISCHE PATENTSCHRIFT

(11) **EP 1 915 559 B1**
(45) Veröffentlichungstag und Bekanntmachung des Hinweises auf die Patenterteilung: **08.09.2010**
(21) Anmeldenummer: 06762594.7
(22) Anmeldetag: 14.07.2006
(51) Int. Cl.: F16L 9/12, F16L 11/04, F16L 11/12, B32B 1/08, B32B 27/34

(54) **HOHLKÖRPER MIT DOPPELTER SPERRSCHICHT**
HOLLOW BODY WITH DOUBLE BARRIER LAYER
CORPS CREUX DOTE D'UNE DOUBLE COUCHE BARRIERE

(30) Priorität: 19.08.2005 EP 05018110
(43) Veröffentlichungstag der Anmeldung: 30.04.2008
(73) Patentinhaber: VERITAS AG, 63571 Gelnhausen (DE)
(72) Erfinder: SEYLER, Andreas, 63584 Gründau (DE)
(74) Vertreter: Grünecker, Kinkeldey, Stockmair & Schwanhäusser Anwaltssozietät
(86) Internationale Anmeldenummer: PCT/EP2006/006911
(87) Internationale Veröffentlichungsnummer: WO 2007/019921

(56) Entgegenhaltungen:
- EP-A- 0 836 042
- EP-A- 1 108 591
- EP-A- 1 162 061
- EP-A- 1 188 552
- EP-A- 1 559 537
- EP-A2- 0 673 762
- WO-A-99/57473
- DE-A1- 4 337 491
- US-A- 5 756 199
- US-A1- 2004 069 361

## Beschreibung

Die vorliegende Erfindung betrifft einen Hohlkörper, insbesondere ein Rohr oder einen Schlauch gemäß dem Oberbegriff des Anspruchs 1.

Ein solcher Hohlkörper ist beispielsweise aus der US 2004/069361 A1 bekannt. Änliche Hohlkörper sind aus der WO 99/57473 A, EP-A-0 673 762 oder US-A-5 756 199 bekannt.

### Hintergrund der Erfindung

Verschiedene Arten von Hohlkörpern bzw. Rohren und Schläuchen sind zum Einsatz im Zusammenhang mit der Beförderung, von Gasen und flüssigen Medien, beispielsweise Kraftstoffe, Öle, Kohlenwasserstoffe und deren Derivate, bekannt. Üblicherweise umfassen derartige Rohre bzw. Schläuche unterschiedliche funktionelle Schichten, die beispielsweise eine Sperrwirkung entfalten sollen (Sperrschicht) oder aber die empfindliche Sperrschicht vor äußeren Einflüssen schützen sollten (Schutzschicht). Daneben können noch eine ganze Reihe an weiteren Schichten vorgesehen sein, beispielsweise farbige Markierungsschichten, Stützschichten zur Verbesserung der mechanischen Eigenschaften usw.

Die bekannten Rohr- bzw. Schlauchsysteme sind dabei allerdings nicht in jeder Hinsicht zufriedenstellend, insbesondere da nicht immer eine ausreichende Sperrwirkung gegenüber allen oben genannten Medien sicherzustellen ist, so dass häufig für die jeweilige Anwendung ein neues Rohr- bzw. Schlauchsystem eingesetzt werden muss.

Insbesondere Schlauch- oder Rohrleitungen für Kraftstoffe müssen derart gestaltet sein, dass sie chemisch gegenüber verschiedenen Bestandteilen des Kraftstoffs resistent sind und zusätzlich ein Austreten von Kraftstoffkomponenten aus dem Schlauch verhindert wird. Gerade bei Kraftfahrzeugen kann es zu längeren Standzeiten kommen, und ein Verlust von Kraftstoff durch Diffusion durch Schlauchleitungen ist sowohl wirtschaftlich als auch umwelttechnisch von großem Nachteil.

Kraftstoffe weisen allgemein verschiedene Zusätze auf. Dazu zählen alkoholische Komponenten, wie Methylalkohol, Ethylalkohol, oder Mischungen davon mit Wasser. Beispielsweise weist Superbenzin einen Alkoholgehalt von 5% oder mehr auf. Daher muss ein Benzinschlauch für Kraftfahrzeuge nicht nur gegenüber reinen Kohlenwasserstoffen resistent sein, sondern auch gegenüber zugesetzten leichtflüchtigen Kohlenwasserstoffkomponenten, die Sauerstoff oder Schwefelatome enthalten, wie die oben erwähnten Alkohole.

Die im Stand der Technik vorgeschlagene Verwendung einfacher Polyamidrohre und Schläuche hat den Nachteil, dass bei Kontakt mit Alkohol Massenvergrößerungen von bis zu 10% auftreten können. Zusätzlich kann durch den Alkohol ein Anteil an Monomeren, Oligomeren und Additiven, die im Polyamidmaterial enthalten sind, beispielsweise Weichmachern, Stabilisatoren etc., herausgelöst werden. Diese Komponenten werden mit dem Benzin in den Motor transportiert und können beispielsweise bei Filtern und Düsen in nachteiliger Weise zu Verstopfungen führen.

Daher wurden im Stand der Technik weiterhin Rohre bzw. Schläuche aus einem Mehrschichtverbund vorgeschlagen, die beispielsweise eine funktionelle Schicht enthalten, die eine Sperrschicht gegenüber dem zu transportierenden Medium darstellt. Diese Mehrschichtsysteme enthalten üblicherweise auch eine Außenschicht, welche die Sperrschicht vor äußeren Einflüssen schützen soll. Zusätzlich können noch weitere Schichten vorgesehen werden, wie farbige Markierungsschichten, Stützschichten zur Verbesserung der mechanischen Eigenschaften usw..

EP-A-0836042 betrifft ein mehrschichtiges Kunststoffrohr, bei dem die Mantelschichten und eine Sperrschicht formschlüssig miteinander verbunden sind. Das Kunststoffrohr besteht aus mindestens drei Schichten, wobei diese aus mindestens zwei voneinander unterschiedlichen Polymeren bestehen und wobei eine polymere Sperrschicht in eine polymere Mantelschicht eingebettet ist.

Als allgemein geeignete Materialien für Sperrschichten wurden beispielsweise Fluorpolymere, wie Polyvinylidenfluorid (PVDF) oder Ethylen-Tetrafluoroethylen (ETFE), vorgeschlagen, da sie gegen polare und unpolare Lösungsmittel resistent sind. Andere geeignete Materialien sind Ethylen/Vinylalkohol-Copolymere (EVOH). Allerdings ergab sich bei Einsatz von EVOH als Sperrschicht der Nachteil, dass dieses Material Feuchtigkeitsempfindlich ist und somit besonders vor Feuchtigkeit geschützt werden muss. Außerdem kann dieses Material nur in Form geringer Schichtdicken verwendet werden, da es sich um ein besonders brüchiges Polymer mit geringer Reißdehnung handelt. Zu dünne Barriereschichten können allerdings die geforderte Barrierewirkung auf Dauer nicht gewährleisten.

Außerdem hat sich gezeigt, dass bei einem solchen Mehrschichtverbund die Haftung der Schichten untereinander problematisch ist. Durch Quellung einzelner Schichten kann es schließlich zur Delamination einzelner Schichten kommen, was von großem Nachteil ist.

Es wurde daher weiterhin vorgeschlagen, mehrschichtige Kunststoffrohre mit zwei Sperrschichten zu verwenden. So beschreibt beispielsweise EP-A-1559537 ein mehrschichtiges Kunststoffrohr mit zumindest einer Trägerschicht aus zumindest einem Kunststoff und zwei Sperrschichten, die jeweils aus einem Sperrschichtkunststoff bestehen, wie PVDF oder EVOH. Um die Haftung der Schichten untereinander zu verbessern und Delamination zu vermeiden, werden Haftvermittlerschichten zwischengeschaltet. Diese Haftvermittler wirken als Trennschicht zwischen den einzelnen Schichten, insbesondere den beiden Sperrschichten.

DE-A-4337491 offenbart einen Hohlkörper aus einem thermoplastischen Material mit einer Laminatwandung, umfassend mindestens zwei Barriereschichten sowie äußere Schichten aus einem Polyolefin. Zwischen den Barriereschichten sowie der Barriereschicht und der Außenschicht sind Haftvermittlerschichten vorgesehen, um die Haftung der Schichten zu verbessern.

Allerdings hat sich gezeigt, dass trotz des Einsatzes von Haftvermittlerschichten nach wie vor eine Quellung eintreten kann, wenn nach einiger Zeit Bestandteile von Kraftstoff in diese Schichten gelangen. Wenn eine solche Haftvermittlerschicht quellt, verschlechtert sich die Haftung der Sperrschichten drastisch, bis hin zur Delamination. Zusätzlich werden bei der Herstellung eines solchen Mehrschichtverbundes durch zusätzliche Schichten weitere Materialien benötigt und es sind zusätzliche Arbeitsschritte erforderlich, was den Preis der Rohre oder Schläuche erhöht.

### Aufgabe der Erfindung

Die im Stand der Technik bekannten Rohr- bzw. Schlauchsysteme sind nicht in jeder Hinsicht zufriedenstellend, da nach wie vor eine Quellung einzelner Schichten des Laminats und in Folge davon eine Delamination auftreten kann. Es war daher die Aufgabe der vorliegenden Erfindung, einen verbesserten Hohlkörper, insbesondere ein Rohr oder einen Schlauch zur Verfügung zu stellen, der die oben genannten Probleme überwindet, insbesondere eine verbesserte Barrierewirkung hat bei verbesserter Haftung der einzelnen Schichten.

### Zusammenfassung der vorliegenden Erfindung

Die oben genannte Aufgabe wird erfindungsgemäß durch einen Hohlkörper gemäß Anspruch 1 gelöst. Bevorzugte Ausführungsformen sind in den Unteransprüchen und der folgenden Beschreibung angegeben.

Durch den direkten Kontakt der Sperrschichten untereinander entfällt eine zusätzliche Haftvermittlerschicht zwischen den beiden Schichten. Dadurch werden Quellung der Zwischenschicht und in Folge davon Delamination ausgeschlossen und die Haftung der Schichten Ober einen langen Zeitraum auch bei Einwirkung von Kraftstoffbestandteilen verbessert.

Zusätzlich weist mindestens eine der Sperrschichten funktionelle Gruppen auf. Solche funktionellen Gruppen umfassen beispielsweise Carbonsäuren oder Carbonsäureanhydrid-Derivate davon.

Das Material für solche Sperrschichten, wie es erfingdungsgemäß eingesetzt wird, kann durch Aufpfropfen oder Copolymerisieren der Ausgangspolymere mit geeigneten reaktiven Verbindungen, beispielsweise Maleinsäureanhydrid, (Meth-)acrylsäure oder Glycidyl(meth-)acrylat, hergestellt werden. Es können auch Mischungen davon eingesetzt werden. Solche Herstellungsverfahren sind dem Fachmann grundsätzlich bekannt.

Es wurde nun überraschend gefunden, dass sich durch solche oberflächenmodifizierte Materialien eine deutlich verbesserte Haftung der beiden Sperrschichten untereinander erreichen lässt, ohne das eine Haftvermittlerschicht verwendet werden muss.

Die Verwendung der oben genannten funktionellen Gruppen zur Haftvermittlerverbesserung war bislang lediglich für die Haftung im Hinblick auf Polyamidschichten bekannt.

Das Material für die beiden Sperrschichten ist bevorzugt chemisch voneinander verschieden. Erfindungsgemäß geeignete Sperrschichtmaterialien sind insbesondere EVOH, PTFE, PFA, ETFE, FEP, PVDF, THV, CTFE, ECTFE und FPM.

Erfindungsgemäß ist es bevorzugt, wenn mindestens eine der beiden Sperrschichten ein fluorhaltiges Material umfasst, bevorzugt THV oder PVDF, insbesondere bevorzugt PVDF.

Die zweite Sperrschicht umfasst bevorzugt ein von der ersten Sperrschicht chemisch verschiedenes Material, das ebenfalls ein fluorhaltiges Material sein kann. In einer anderen bevorzugten Ausführungsform ist das Material für die zweite Sperrschicht EVOH. Eine erfindungsgemäß besonders bevorzugte Kombination für die beiden Sperrschichten ist eine Sperrschicht aus EVOH und eine Sperrschicht aus PVDF.

Die Reihenfolge der beiden Sperrschichten von innen nach außen ist bevorzugt eine innen liegende EVOH Sperrschicht kombiniert mit einer darauf folgenden weiter außen liegenden fluorhaltigen Sperrschicht, wie PVDF.

Die erfindungsgemäßen Sperrschichten weisen bevorzugt Dicken von 0,003 bis 0,2 mm auf, so dass sich für die doppelte Sperrschicht eine bevorzugte Gesamtdicke von 0,004 bis 0,4 mm ergibt. Bevorzugt beträgt die Dicke jeder einzelnen Sperrschicht 0,004 bis 0,1 mm, so dass sich eine Gesamtdicke der doppelten Sperrschicht von 0,008 bis 0,2 mm ergibt.

Für die Innenschicht und die Außenschicht können bekannte thermoplastische Materialien verwendet werden. Beispiele für geeignete thermoplastische Materialien umfassen Polyamide, Polyolefine oder Polyester. Bevorzugt sind dabei Polyamide, besonders bevorzugt PA6, PA66, PA10, PA11, PA12, PA610, und PA612.

Weiterhin ist es erfindungsgemäß vorgesehen, dass das Material der Innenschicht chemisch verschieden zum Material der Außenschicht ist. Besonders bevorzugte Polyamidmaterialien für die Innenschicht und die Außenschicht sind PA6, PA66, PA610, PA12 und PA 612. Ganz besonders bevorzugt ist dabei PA6 für die Innenschicht, sowie PA12 und PA612 für die Außenschicht.

Die Innenschicht sowie die Außenschicht weisen bevorzugt eine Schichtdicke von etwa 0,3 bis 4 mm auf, bevorzugt 0,3 bis 2,5 mm, insbesondere bevorzugt 0,3 bis 2,2 mm.

Durch die erfindungsgemäße Kombination der beiden Sperrschichten zu einer doppelten Sperrschicht ist es möglich, die Sperrwirkung gegenüber einer Vielzahl an Medien zu optimieren, wobei gleichzeitig weniger Material eingesetzt werden muss, und wobei auf Haftvermittlerschichten zwischen den Sperrschichten verzichtet werden kann. Insbesondere ist EVOH eine besonders gute Sperrschicht gegen reine Kohlenwasserstoffe, während das fluorhaltige Material eine gute Sperrwirkung gegen sauerstoffhaltige Verbindungen, wie Alkohole aufweist. Somit eignen sich die erfindungsgemäßen Hohlkörper, insbesondere Rohre oder Schläuche, zum Transport von Kohlenwasserstoffen und Kraftstoffen. Durch die doppelte Sperrschichtwirkung wird die Lebensdauer der Schläuche deutlich verlängert und die Umweltbelastung reduziert. Gleichzeitig wird durch weniger Material und Arbeitsaufwand bei der Herstellung das Verfahren wirtschaftlich effizienter.

Ein weiterer erfindungsgemäßer Vorteil liegt darin, dass zusätzlich zur Haftung der beiden Sperrschichten direkt aneinander die Oberflächenmodifizierung der Materialien entsprechend genutzt werden kann, um die Haftung der Sperrschichten an den thermoplastischen Materialien der Innenschicht und der Außenschicht ebenfalls zu verbessern. Daher können weitere Haftvermittlerschichten zwischen diesen, wie im Stand der Technik vorgeschlagen, ebenfalls vermieden werden.

Der erfindungsgemäße Hohlkörper, insbesondere ein Rohr oder Schlauch, kann in bekannter Weise hergestellt werden, beispielsweise durch ein Extrusionsverfahren. Die Dimensionierung des Hohlkörpers erfolgt dabei in Abhängigkeit vom gewünschten Einsatzzweck und kann entsprechend variiert werden. Geeignete Innendurchmesser des umschlossenen Hohlraums sind dem Fachmann bereits geläufig.

Zusätzlich zu den Vorteilen mit Bezug auf das zu führende Medium ist außerdem durch die Materialeinsparung ein kostengünstigeres Herstellungsverfahren möglich, da weniger Arbeitsschritte benötigt werden bzw. die zur Herstellung verwendeten Maschinen vereinfach werden können. Außerdem wird die Belastung für die Umwelt bei Entsorgung verbrauchter Schläuche reduziert.

### Kurze Beschreibung der Zeichnungen

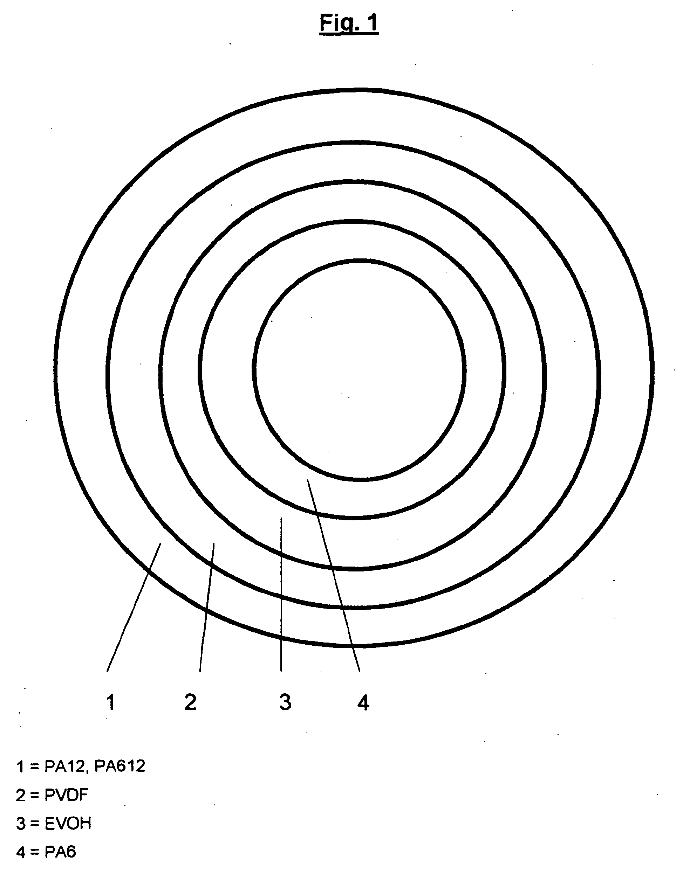

- Fig. 1: zeigt einen erfindungsgemäßen Hohlkörper mit einer Innenschicht und einer Außenschicht und zwei zwischen der Innenschicht und der Außenschicht ange- ordneten Sperrschichten, die direkt miteinander verbunden sind.

### Detaillierte Beschreibung der vorliegenden Erfindung

Ein erfindungsgemäßer Hohlkörper in Gestalt eines mehrschichtigen Schlauchs wird nachstehend mit Bezug auf Fig. 1 beschrieben. Der erfindungsgemäße Hohlkörper umfasst eine Außenschicht 1, eine erste Sperrschicht 2, eine zweite Sperrschicht 3 und eine Innenschicht 4.

Der erfindungsgemäße Schlauch zeichnet sich dadurch aus, dass er innen sowie außen jeweils eine Schicht 4, 1 aus einem thermoplastischen Material aufweist. Dabei können die üblichen thermoplastischen Materialien Verwendung finden, wie Polyolefine, Polyamide oder Polyester. Erfindungsgemäß bevorzugt sind dabei Polyamide, wie PA6, PA66, PA10, PA11, PA12, PA61 0, PA612 usw.. Erfindungsgemäß ist es dabei bevorzugt, wenn das Material der Innenschicht 4 chemisch verschieden zum Material der Außenschicht 1 ist. Erfindungsgemäß bevorzugte Polyamidmaterialien für die Innenschicht 4 sowie die Außenschicht 1 sind PA6, PA66, PA610, PA12 und PA612. Besonders bevorzugt sind dabei PA6, PA12 und PA612, wobei PA6 insbesondere bevorzugt für die Innenschicht 4 eingesetzt wird, während PA12 bzw. PA612 bevorzugt für die Außenschicht 1 eingesetzt wird.

Die Innenschicht 4 sowie die Außenschicht 1 weisen bevorzugt eine Schichtdicke von etwa 0,3 bis 4 mm auf, bevorzugt 0,3 bis 2,5 mm, insbesondere bevorzugt 0,3 bis 2,2 mm, wie beispielsweise 0,3 bis 1,7 mm oder 0,4 bis 1,2 mm.

Die erfindungsgemäße doppelte Sperrschicht 2, 3 umfasst zwei Schichten 2, 3 aus einem typischen Sperrschichtmaterial, wobei die beiden Schichten 2, 3 chemisch voneinander verschieden sind. Erfindungsgemäß geeignete Sperrschichtmaterialien sind insbesondere EVOH, PTFE, PFA, ETFE, FEP, PVDF, THV, CTFE, ECTFE und FPM. Erfindungsgemäß bevorzugt ist es, wenn mindestens eine der beiden Sperrschichten 2 ein fluorhaltiges Material umfasst, bevorzugt THV oder PVDF, insbesondere bevorzugt PVDF. Die weitere Sperrschicht 3 umfasst ein chemisch von der ersten Sperrschicht 2 verschiedenes fluorhaltiges Material, wie die oben angeführten, oder EVOH. Es ist bevorzugt, wenn eine der beiden Sperrschichten 3 EVOH umfasst. Eine besonders bevorzugte Kombination für die doppelte Sperrschicht 2, 3 ist somit eine Sperrschicht 3 aus EVOH, kombiniert mit einer Sperrschicht 2 aus PVDF oder THV, insbesondere PVDF. Die besonders bevorzugte Kombination umfasst also eine Sperrschicht 3 aus EVOH, kombiniert mit einer Sperrschicht 2 aus PVDF. Die Reihenfolge dieser beiden Sperrschichten (von innen nach außen) kann im Prinzip beliebig gewählt werden, bevorzugt ist aber eine weiter innen liegende EVOH-Sperrschicht 3, kombiniert mit einer (weiter außen) darauf folgenden fluorhaltigen Sperrschicht 2, insbesondere PVDF.

Die erfindungsgemäßen Sperrschichten 2, 3 weisen bevorzugt Dicken von 0,002 bis 0,2 mm auf, so dass sich für die doppelte Sperrschicht 2, 3 eine bevorzugte Gesamtdicke von 0,004 bis 0,4 mm ergibt. Bevorzugt beträgt die Dicke jeder einzelnen Sperrschicht 2, 3 etwa 0,004 bis 0,1 mm, so dass sich eine Gesamtdicke der doppelten Sperrschicht 2, 3 von 0,008 bis 0,2 mm ergibt.

Durch die erfindungsgemäße Kombination der beiden Sperrschichten 2, 3 zu einer doppelten Sperrschicht ist es möglich, die Sperrwirkung gegenüber einer Vielzahl an Medien zu maximieren, bei gleichzeitig minimalem Materialeinsatz. Insbesondere bei den bevorzugten Kombinationen für die Sperrschichten 2, 3, d. h. eine EVOH-Sperrschicht 3 kombiniert mit einer fluorhaltigen Sperrschicht 2, insbesondere PVDF, kann eine ausgezeichnete kombinierte Sperrwirkung erhalten werden. Während EVOH insbesondere sehr gut gegen reine Kohlenwasserstoffe eine Sperrwirkung entwickelt, zeigt das fluorhaltige Material, insbesondere PVDF eine sehr gute Sperrwirkung gegen sauerstoffhaltige Verbindungen, d. h. Kohlenwasserstoffderivate, die durch Sauerstoff enthaltende funktionelle Gruppen gekennzeichnet sind (wie Alkohole). Somit eignen sich die erfindungsgemäßen Rohre bzw. Schläuche sowohl zum Transport einer Mischung aus reinen Kohlenwasserstoffen z.B. Diesel und Derivaten davon, als auch zum aufeinander folgenden Transport unterschiedlicher Materialien z.B. Ottokraftstoff (wie oben angeführt, z. B. zunächst reine Kohlenwasserstoffe, anschließend sauerstoffhaltige Verbindungen). Erfindungsgemäß wird eine ausgezeichnete Sperrwirkung sichergestellt, ohne dass beispielsweise Transportleitungen ausgetauscht werden müssen.

Der erfindungsgemäße Schlauch bzw. das erfindungsgemäße Rohr umfasst bevorzugt lediglich die vier oben diskutierten wesentlichen Schichten (Innenschicht 4, Außenschicht 1, zwei Sperrschichten 2, 3). Es ist aber auch möglich, dass der erfindungsgemäße Schlauch bzw. das erfindungsgemäße Rohr weitere Schichten umfasst, beispielsweise haftvermittelnde Schichten zwischen einer der Sperrschichten 2, 3 und der daran angrenzenden Innen- oder Außenschicht 4, 1, sowie Stützschichten (Verstärkungsmaterialien, wie Glasfasern usw.) oder auch farbige Markierungsschichten. Materialien, geeignet für derartige weitere Schichten sind dem Fachmann bekannt.

Ein erfindungsgemäßer Vorteil ist, dass zwischen den konstituierenden Schichten 1, 2, 3, 4 des erfindungsgemäßen Hohlkörpers keine Haftschichten notwendig sind, um eine ausreichende Haftung zu erhalten. Erfindungsgemäß wird auf eine direkte Anbindung zurückgegriffen (Direct Bonding), wobei mindestens einer der beiden Sperrschichten funktionelle Gruppen aufweist; gegebenenfalls kann eine leichte Additivierung und/oder direkte chemische Modifizierung des Sperrschichtmaterials vorteilhaft sein. Erfindungsgemäß können die fluorhaltigen Sperrschichtmaterialien in der oben beschriebenen Art und Weise mit geeigneten funktionellen Gruppen ausgerüstet sein, beispielsweise durch Pfropfung, um so eine ausreichende Haftung an einer jeweils benachbarten Sperrschicht 2, 3 und/oder an Polyamid sicherzustellen. Geeignete funktionelle Gruppen sind beispielsweise Säureanhydridgruppen oder Derivate davon, insbesondere Maleinsäureanhydridgruppen. So haftet beispielsweise mit Maleinsäureanhydrid gepfropftes PVDF besser an Polyamiden, verglichen mit reinem PVDF. Diese beispielhafte Ausführung gilt in analoger Weise für die weiteren in der vorliegenden Anmeldung aufgezählten fluorhaltigen Sperrschichtmaterialien. EVOH dagegen haftet direkt ohne Additiv sowohl an Polyamid als auch an den erfindungsgemäß zu verwendenden fluorhaltigen Materialien, wie insbesondere PVDF und modifiziertes PVDF.

Erfindungsgemäß ergibt sich somit die bevorzugte Ausführungsform, wie sie in Figur 1 dargestellt ist. In Figur 1 ist der oben beschriebene Schlauch im Querschnitt gezeigt, mit den vier konstituierenden Schichten 1, 2, 3, 4, die wie folgt ausgewählt sind: Für die Außenschicht 1 ist das Material PA12 oder PA612 vorgesehen. Darauf folgt die erste Sperrschicht 2 aus PVDF, gepfropft mit Maleinsäureanhydrid (zur Verbesserung der Haftung). Anschließend folgt die zweite Sperrschicht 3 aus EVOH. Abschließend ist die Innenschicht 4 aus Polyamid vorgesehen, bevorzugt aus PA6.

Der erfindungsgemäße Schlauch bzw. das erfindungsgemäße Rohr können in üblicher Art und Weise hergestellt werden, beispielsweise im Extrusionsverfahren. Die Dimensionierung des Schlauches bzw. des Rohrs erfolgt dabei in Abhängigkeit vom gewünschten Einsatzzweck. Geeignete Innendurchmesser des umschlossenen Hohlraums sind dem Fachmann geläufig.

## Patentansprüche

1. Hohlkörper, insbesondere Rohr oder Schlauch, umfassend eine Innenschicht (4) und eine Außenschicht (1), jeweils aus einem thermoplastischen Material, sowie zwei Sperrschichten (2, 3), die sich zwischen der Innenschicht (4) und der Außenschicht (1) befinden, **dadurch gekennzeichnet, dass** die beiden Sperrschichten (2, 3) unterschiedliche Sperrschichtkunststoffe aufweisen und direkt miteinander verbunden sind, wobei das Material mindestens einer der beiden Sperrschichten (2, 3) funktionelle Gruppen aufweist, um die Haftung an der benachbarten Sperrschicht (2, 3) sicherzustellen, wobei das Material der Innenschicht (4) chemisch verschieden zum Material der Außenschicht (1) ist.

2. Hohlkörper nach Anspruch 1 , worin das Material der beiden Sperrschichten chemisch verschieden ist.

3. Hohlkörper nach Anspruch 1 oder 2, worin das Material für die Sperrschichten ausgewählt ist unter THV, PVDF, PTFE, PFA, FEP, CTFE, ECTFE, FPM und EVOH.

4. Hohlkörper nach Anspruch 3, wobei eine der Sperrschichten PVDF umfasst und die andere Sperrschicht EVOH umfasst.

5. Hohlkörper nach einem der Ansprüche 1 bis 4, wobei das thermoplastische Material für die Innenschicht und die Aussenschicht ausgewählt ist aus der Gruppe der Polyamide.

6. Hohlkörper nach Anspruch 5, wobei das Polyamidmaterial ausgewählt ist aus der Gruppe bestehend aus Polyamid 6, Polyamid 66, Polyamid 12 und Polyamid 612.

7. Hohlkörper nach einem der Ansprüche 1 bis 7, wobei das Material mindestens eine der beiden Sperrschichten funktionelle Gruppen aufweist ausgewählt aus der Gruppe bestehend aus Carbonsäure und Carbonsäureanhydrid-Derivaten.

8. Hohlkörper nach Anspruch 7, worin die funktionellen Gruppen ausgewählt sind aus der Gruppe bestehend aus Maleinsäureanhydrid, (Meth-)acrylsäure oder Glycidyl(meth)-acrylat.

9. Verfahren zur Herstellung eines Hohlkörpers gemäß einem der Ansprüche 1 bis 8, umfassend den Schritt der Coextrusion von mehreren Schichten, **dadurch** charakterisiert, dass die beiden Sperrschichten direkt miteinander verbunden sind.

10. Verwendung des Hohlkörpers gemäß einem der Ansprüche 1 bis 8 als Benzinschlauch.

## Claims

1. Hollow body, in particular a tube or pipe, comprising an inner layer (4) and an outer layer (1), each made from a thermoplastic material, and two barrier layers (2, 3) disposed between the inner layer (4) and the outer layer (1), **characterised in that** the two barrier layers (2, 3) comprise different barrier layer plastics and are directly joined to one another, and the material of at least one of the two barrier layers (2, 3) contains functional groups in order to ensure adhesion to the adjacent barrier layer (2, 3), and the material of the inner layer (4) is chemically different from the material of the outer layer (1).

2. Hollow body as claimed in claim 1, in which the material of the two barrier layers is chemically different.

3. Hollow body as claimed in claim 1 or 2, in which the material for the barrier layers is selected from THV, PVDF, PTFE, PFA, FEP, CTFE, ECTFE, FPM and EVOH.

4. Hollow body as claimed in claim 3, in which one of the barrier layers comprises PVDF and the other barrier layer comprises EVOH.

5. Hollow body as claimed in one of claims 1 to 4, in which the thermoplastic material for the inner layer and the outer layer is selected from the group of polyamides.

6. Hollow body as claimed in claim 5, in which the polyamide material is selected from the group comprising polyamide 6, polyamide 66, polyamide 12 and polyamide 612.

7. Hollow body as claimed in one of claims 1 to 7, in which the material of at least one of the two barrier layers contains functional groups selected from the group comprising carboxylic acid and carboxylic acid anhydride derivatives.

8. Hollow body as claimed in claim 7, in which the functional groups are selected from the group comprising maleic anhydride, (meth)acrylic acid or glycidyl(meth)acrylate.

9. Method of producing a hollow body as claimed in one of claims 1 to 8, comprising the step of co-extruding several layers, **characterised in that** the two barrier layers are directly joined to one another.

10. Use of the hollow body as claimed in one of claims 1 to 8 as a fuel pipe.

## Revendications

1. Corps creux, en particulier tuyau ou tube, incluant une couche intérieure (4) et une couche extérieure (1), respectivement constituées d'un matériau thermoplastique, ainsi que deux couches barrières (2, 3) qui se situent entre la couche intérieure (4) et la couche extérieure (1), **caractérisé en ce que** les deux couches barrières (2, 3) comprennent des matériaux plastiques de couche barrière différents et sont directement assemblées l'une avec l'autre, dans lequel le matériau d'au moins une des deux couches barrières (2, 3) comprend des groupements fonctionnels afin de garantir l'adhérence à la couche barrière adjacente (2, 3), dans lequel le matériau de la couche intérieure (4) est chimiquement différent du matériau de la couche extérieure (1).

2. Corps creux selon la revendication 1, dans lequel le matériau des deux couches barrières est chimiquement différent.

3. Corps creux selon la revendication 1 ou 2, dans lequel le matériau pour les couches barrières est choisie parmi THV, PVDF, PTFE, PFA, FEP, CTFE, ECTFE, FPM et EVOH.

4. Corps creux selon la revendication 3, dans lequel l'une des couches barrières contient du PVDF et l'autre couche barrière contient de l'EVOH.

5. Corps creux selon l'une des revendications 1 à 4, dans lequel le matériau thermoplastique pour la couche intérieure et la couche extérieure est choisi dans le groupe des polyamides.

6. Corps creux selon la revendication 5, dans lequel la matière polyamide est choisie dans le groupe constitué de polyamide 6, de polyamide 66, de polyamide 12 et de polyamide 612.

7. Corps creux selon l'une des revendications 1 à 7, dans lequel le matériau d'au moins une des deux couches barrières comprend des groupements fonctionnels choisis dans le groupe constitué de l'acide carboxylique et de dérivés d'anhydride d'acide carboxylique.

8. Corps creux selon la revendication 7, dans lequel les groupements fonctionnels sont choisis dans le groupe constitué d'anhydride d'acide maléique, d'acide (méth)acrylique ou de (méth)acrylate de glycidyle.

9. Procédé pour fabriquer un corps creux selon l'une des revendications 1 à 8, comprenant l'étape de la coextrusion de plusieurs couches, **caractérisé en ce que** les deux couches barrières sont directement assemblées l'une avec l'autre.

10. Utilisation du corps creux selon l'une quelconque des revendications 1 à 8 en tant que tuyau d'essence.
